(19) Europäisches Patentamt

European Patent Office

Office européen des brevets

(11) Veröffentlichungsnummer : **0 366 928 B1**

# (12) EUROPÄISCHE PATENTSCHRIFT

(45) Veröffentlichungstag der Patentschrift :
**15.04.92 Patentblatt 92/16**

(21) Anmeldenummer : **89117729.7**

(22) Anmeldetag : **26.09.89**

(51) Int. Cl.⁵ : **F02C 7/08,** F02C 7/143,
F02C 3/30, F02C 3/28

(54) **Verfahren zur Uebertragung der fühlbaren Wärme von einem heissen Gasstrom auf einen kühleren Gasstrom.**

(30) Priorität : **03.11.88 DE 3837265**

(43) Veröffentlichungstag der Anmeldung :
**09.05.90 Patentblatt 90/19**

(45) Bekanntmachung des Hinweises auf die
Patenterteilung :
**15.04.92 Patentblatt 92/16**

(84) Benannte Vertragsstaaten :
**DE ES GB IT NL SE**

(56) Entgegenhaltungen :
**EP-A- 0 051 493
EP-A- 0 150 990
EP-A- 0 185 841
DE-A- 2 031 191
FR-A- 2 401 319
US-A- 4 702 074**

(73) Patentinhaber : **Krupp Koppers GmbH
Altendorfer Strasse 120
W-4300 Essen 1 (DE)**

(72) Erfinder : **Dziobek, Frank
Walkmühlenstrasse 113
W-4330 Mülheim/Ruhr (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Übertragung der fühlbaren Wärme von einem heißen verunreinigten Rohgas, das durch Vergasung von Brennstoffen mit sauerstoffhaltigen Gasen erzeugt wird, auf das der Gasturbine eines GUD- (Gas- und Dampfturbinen-) Kraftwerk zuzuführende kalte Reingas.

Ein solches Verfahren ist aus EP-A-0 185 841 bekannt.

Bei der Vergasung von insbesondere festen Brennstoffen geht es darum, die bei der Vergasung entstehende, an das verunreinigte Rohgas gebundene fühlbare Wärme an das kalte gereinigte Reingas zu übertragen, wenn das Reingas auf einem für die weitere Verwendung erforderlichen höheren Temperaturniveau vorliegen soll. Es wird daher angestrebt, zur Optimierung des Gesamtwirkungsgrades möglichst viel Wärme durch diese Abhitzeverwertung der Rohgaserzeugung dem Reingas für die weitere Nutzung in der Gasturbine aufzuprägen.

Zur Vergrößerung des Massenstromes für die Gasturbine wird dem Reingas Stickstoff zugemischt. Wegen der Gefahr der Selbstentzündung beim Zumischen von sauerstoffhaltigem Stickstoff kann das Reingas im Wärmetauscher nur auf 360°C aufgewärmt werden. Daraus folgt eine hohe Austrittstemperatur des Rohgases, während zur Erzielung eines hohen thermischen Wirkungsgrades in der Abhitze verwertung auf der Rohgasseite eine niedrige Austrittstemperatur angestrebt wird.

Da Rohgas und Reingas bei einer quenchlosen Konzeption etwa den gleichen Volumenstrom besitzen, wird der Rohgas-Reingas-Wärmetauscher bei angestrebter tiefer Rohgasaustrittstemperatur wegen der großen Wärmetauscherfläche ein kostspieliges Bauteil.

Dem Rohgas-Reingas-Wärmetauscher ist in der Regel ein Abhitzekessel hinter dem Vergaser vorgeschaltet, dessen Austrittstemperatur bei hoher Abhitzenutzung ebenfalls niedrig angestrebt werden muß, wodurch auch dieses Bauteil infolge des größeren Bauumfanges beiniedrigerer Austrittstemperatur kostspieliger wird.

Aus alledem folgt, daß bei guter Ausnutzung der fühlbaren Wärme des Vergasungsrohgases Abhitzekessel und Rohgas-Reingas-Wärmetausscher sehr hohe Anlagenkosten verursachen.

Der Erfindung liegt daher die Aufgabe zugrunde, das Verfahren der eingangs beschriebenen Gattung dahingehend zu verbessern, daß bei gleich hohem thermischen Ausnutzungsgrad die Anlagenkosten spürbar verringert werden.

Da die Wärmeübergangsverhältnisse im wesentlichen physikalisch vorgegeben sind, kann dieses Ziel nur durch Veränderung der Grädigkeiten, das sind die Temperaturdifferenzen zwischen wärmeabgebendem und wärmeaufnehmendem Medium, erreicht werden.

Zur Lösung der genannten Aufgabe wird erfindungsgemäß vorgeschlagen, daß in den kühleren Gasstrom Wasser eingespritzt wird. Dieses Einspritzen kann einstufig erfolgen. Nach einem weiteren Merkmal der Erfindung kann das Einspritzen von Wasser jedoch auch mehrstufig vorgesehen sein. In jedem Fall ist hierbeinatürlich darauf zu achten, daß keine Taupunktunterschreitung auf der Rohgasseite eintritt.

Durch das Einspritzen von Wasser wird die Grädigkeit des Wärmetauschers vergrößert. Weiterhin wird durch die Vergrößerung des Massenstromes des kühleren Gases nach dem Wassereinspritzen der ausgekoppelte Wärmestrom vergrößert.

Bei der Vergasungsanlage mit angeschlossenem GUD-Kraftwerk verkleinert sich infolge der erfindungsgemäßen Maßnahme das der Vergasung nachgeschaltete Abhitzenutzungssystem.

Der in der Regel dem Strahlungsteil des Abhitzekessels nachgeschaltete Konvektionsteil wird sehr klein oder kann entfallen. Nach dem Strahlungskessel folgt unmittelbar der Rohgas-Reingas-Wärmetauscher. So werden die Summe der installierten Heizflächen und damit die Anlagenkosten minimiert.

Vorteilhaft ist zusätzlich, daß durch die Regelung der eingespritzten Wassermenge die Austrittstemperatur des Reingases beeinflußbar ist und auf diese Weise der Auswirkung einer rohgasseitigen Verschmutzung mit Auswirkung auf die Austrittstemperatur des Reingases entgegengewirkt werden kann.

Der Wasser- bzw. Wasserdampfgehalt des Reingases bewirkt neben einer Steigerung des Wärme- und Massenstromes, die zur Leistungssteigerung der nachgeschalteten Gasturbine beiträgt, eine günstige Beeinflussung der $NO_x$-Emission in der Brennkammer der Gasturbine und damit des $NO_x$-Gehaltes des Abgases, ein Erfordernis aus umwelttechnischer Sicht. Es wird ebenfalls erwartet, daß die Reingastemperatur durch den Wasserdampfgehalt über die bisher übliche Temperatur angehoben werden kann, da die Selbstentzündungstemperatur nach oben verschoben wird.

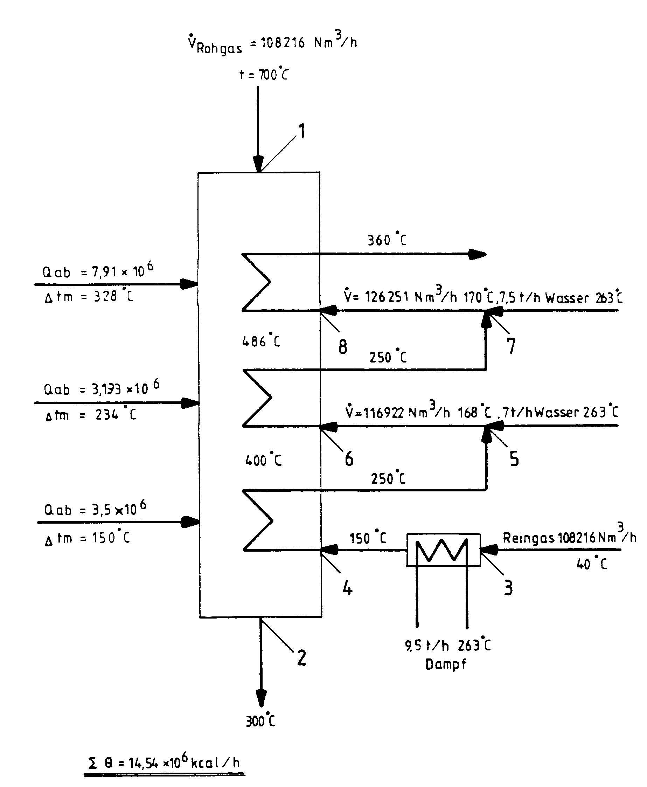

Die Erfindung wird im folgenden anhand eines Ausführungsbeispiels und der Zeichnung näher erläutert.

Das Rohgas in einem Mengenstrom von 108 216 Nm³/h bei einer Temperatur von 700°C tritt bei 1 in den Rohgas-Reingas-Wärmetauscher ein und mit 300°C bei 2 aus. Im Gegenstrom strömt der gleich große Reingasstrom bei 3 mit 40°C zunächst in einen dampfbeheizten Vorwärmer, den er mit 150°C verläßt, um bei 4 in die erste Stufe des Rohgas-Reingas-Wärmetauschers einzufließen. Auf 250°C aufgeheizt, wird das Reingas abgezogen und bei 5 mit 7 t/h Wasser auf 168°C abgekühlt. Bei 6 treten 116 922 Nm³/h Gemisch Reingas-Wasserdampf in die zweite Stufe ein und werden auf 250°C erwärmt, abgezogen und bei 7 mit 7,5 t/h Wasser auf 170°C abgekühlt. Bei 8 strömen 126 251 Nm³/h Reingas und Wasserdampf in die dritte Stufe, die sie mit ihrer Endtemperatur von 360°C verlassen

Das Rohgas kühlt sich in der dritten Stufe auf 486°C und in der zweiten Stufe auf 400°C ab. Insgesamt werden 14,54 Mio kcal/h ausgekoppelt, gegenüber 7,4 Mio kcal/h bei einem Vergleichsfall ohne Wassereinspritzung. Auch im Vergleichsfall sind die Rohgasmenge- und -eintrittstemperatur gleich, ebenso die Reingasmenge und -eintritts- sowie -austrittstemperaturen. Die Rohgas-Austrittstemperatur am Ende des einstufigen Rohgas-Reingas-Wärmetauschers beträgt allerdings 500°C, entsprechend niedriger ist die ausgekoppelte Wärmemenge.

Im Vergleich der Schaltung nach der Erfindung (Strahlungsteil und Rohgas-Reingas-Wärmetauscher mit Wassereinspritzung) mit einer herkömmlichen Schaltung (Strahlungsteil, Konvektionsteil, Rohgas-Reingas-Wärmetauscher ohne Wassereinspritzung) verringert sich durch Wegfall des Konvektionsteiles die Summe der Heizflächen von 1728 m² auf 631 m² bei fast gleich großer Wärmeauskopplung von 43,79 Mio kcal/h nach der Erfindung gegenüber 43,94 Mio kcal/h auf herkömmliche Art. Entsprechend niedriger sind die Anlagenkosten.

## Patentansprüche

1. Verfahren zur Übertragung der fühlbaren Wärme von einem heißen verunreinigten Rohgas, das durch Vergasung von Brennstoffen mit sauerstoffhaltigen Gasen erzeugt wird, auf das der Gasturbine eines GUD-Kraftwerkes zuzuführende kalte Reingas unter Anwendung eines Rohgas-Reingas-Wärmetauschers, dadurch gekennzeichnet, daß in den Reingasstrom in einer oder mehreren Stufen Wasser eingespritzt wird, wobei das Reingas zum Zwecke der Wassereinspritzung aus dem Wärmetauscher abgezogen und anschließend in diesen wieder eingeleitet wird.

2. Verfahren nach Anspruch 1, dadurch gekennzeichnet, daß die Wassereinspritzung in den Reingasstrom dann erfolgt, sobald dieser im Wärmetauscher eine Temperatur von 250°C erreicht hat.

## Claims

1. Process for transferring the sensible heat from a hot impure crude gas produced by gasification of fuels with oxygen-containing gases to the cold pure gas to be fed to the gas turbine of a gas-and-steam turbine power station, using a crude gas/pure gas heat exchanger, characterised in that water is injected in one or more stages into the pure gas stream, the pure gas being extracted from the heat exchanger for the purpose of water injection and then being re-introduced into it.

2. Process according to Claim 1, characterised in that the water injection into the pure gas stream is effected as soon as the latter has reached a temperature of 250°C in the heat exchanger.

## Revendications

1. Procédé pour transférer la chaleur sensible d'un gaz brut impur chaud, qui a été produit par gazéification de combustibles avec des gaz contenant de l'oxygène, au gaz pur froid destiné à l'alimentation de la turbine à gaz d'une centrale électrique à turbines à gaz et à vapeur en utilisant un échangeur de chaleur de gaz brut à gaz pur, caractérisé en ce que de l'eau est injectée en un ou plusieurs stades dans le flux de gaz pur, le gaz pur étant, en vue de l'injection d'eau, soutiré de l'échangeur de chaleur, puis réintroduit dans celui-ci.

2. Procédé suivant la revendication 1, caractérisé en ce que l'injection d'eau dans le flux de gaz pur s'effectue dès que celui-ci a atteint une température de 250°C dans l'échangeur de chaleur.

$\dot{V}_{Rohgas}$ = 108 216 Nm³/h

t = 700 °C

1

360 °C

$Q_{ab}$ = 7,91 × 10⁶

Δ tm = 328 °C

$\dot{V}$ = 126 251 Nm³/h 170 °C ,7,5 t/h Wasser 263°C

486 °C          8          250 °C          7

$Q_{ab}$ = 3,193 ×10⁶

Δ tm = 234 °C

$\dot{V}$ =116 922 Nm³/h 168 °C ,7 t/h Wasser 263°C

400 °C          6          5

250 °C

$Q_{ab}$ = 3,5 ×10⁶

Δ tm = 150 °C

150 °C          Reingas 108 216 Nm³/h

4          3          40 °C

2

9,5 t/h 263°C
Dampf

300 °C

$\sum Q$ = 14,54 ×10⁶ kcal / h